**Europäisches Patentamt**

**European Patent Office**

**Office européen des brevets**

(19)

(11) Veröffentlichungsnummer : **0 216 882**
**B1**

(12)

# EUROPÄISCHE PATENTSCHRIFT

(45) Veröffentlichungstag der Patentschrift :
20.09.89

(51) Int. Cl.⁴ : **A 47 G 1/10**

(21) Anmeldenummer : **86902379.6**

(22) Anmeldetag : **22.03.86**

(86) Internationale Anmeldenummer :
**PCT/EP 86/00172**

(87) Internationale Veröffentlichungsnummer :
**WO/8605668 (09.10.86 Gazette 86/22)**

(54) GESCHLOSSENER DEKORRAHMEN.

(30) Priorität : **29.03.85 DE 8509511 U**

(43) Veröffentlichungstag der Anmeldung :
**08.04.87 Patentblatt 87/15**

(45) Bekanntmachung des Hinweises auf die Patenterteilung : **20.09.89 Patentblatt 89/38**

(84) Benannte Vertragsstaaten :
**CH DE FR GB LI NL SE**

(56) Entgegenhaltungen :
**EP-A- 0 068 885**
**WO-A-84 /043 66**
**FR-A- 2 331 308**
**GB-A- 1 290 579**
**NL-A- 8 302 146**
**US-A- 4 477 990**
**Die Akte enthält technische Angaben, die nach dem**
**Eingang der Anmeldung eingereicht wurden und die**
**nicht in dieser Patentschrift enthalten sind.**

(73) Patentinhaber : **RAHMEN MIT SYSTEM GMBH**
**Heesfeld 14 A**
**D-3300 Braunschweig (DE)**

(72) Erfinder : **WALTER, Eckhard**
**Heesfeld 14 A**
**D-3300 Braunschweig (DE)**

(74) Vertreter : **Lins, Edgar, Dipl.-Phys. et al**
**Patentanwälte Gramm + Lins Theodor-Heuss-**
**Strasse 2**
**D-3300 Braunschweig (DE)**

## Beschreibung

Die Erfindung betrifft einen geschlossenen Dekorrahmen aus miteinander verbundenen Profilstücken, die mit einer Hohlkammer versehen sind und von außen sichtbar eine Stirnfläche und eine umlaufende Außenwand sowie eine Rückseite und eine von außen nicht sichtbare zur Außenwand parallele Innenwand bilden, wobei die Profilstücke jeweils mittels eines Eckteils verbunden sind, das im Eckbereich die Außenwände und die Stirnflächen der Profilstücke im wesentlichen fortsetzt und mit jeweils einem Ansatz in die jeweilige Hohlkammer der beiden benachbarten Profilstücke ragt und dort mit ihnen verbunden ist.

Derartige Dekorrahmen werden in erster Linie als Bilderrahmen verwendet, dienen aber auch zur Halterung von Spiegeln. Üblicherweise werden die Profilstücke für rechteckige Rahmen im Eckbereich auf Gehrung geschnitten und dort miteinander, beispielsweise durch Klebung, verbunden. Dadurch entstehen streng rechteckige Rahmen, die ein gefälliges Aussehen nur dann erhalten, wenn der Gehrungsschnitt außerordentlich sorgfältig erfolgt ist. Eine Variation der Formgebung der Rahmen im Eckbereich ist damit nicht möglich.

Durch die GB-A-1 290 579 ist es bekannt, für einen derartigen Dekorrahmen geradlinige Profilstücke zu verwenden, die durch Eckteile miteinander verbunden werden. Die Eckteile weisen hierzu aus zu den Profilstücken gerichteten Anschlagflächen herausragende Ansätze auf, die in Hohlkammern der Profilstücke hineinragen und die Verbindung bewirken. Die Profilstücke sind mit einer zur Innenseite des Rahmens offenen Nut versehen, in die ein Bild einschiebbar ist. Die entsprechende Nut setzt sich in den Eckteilen fort. Die Profilstücke sind blockförmig ausgebildet, weisen also auf der Stirnseite die gleiche Breite auf wie auf der Rückseite des Rahmens.

Ein ähnlicher Dekorrahmen ist durch die den Oberbegriff des Anspruches 1 zeigende FR-A-2 331 308 bekannt. Die dabei verwendeten Eckteile weisen eine abgerundete Außenkante auf. Die Halterung des Bildes erfolgt ebenfalls in einer zur Innenseite des Dekorrahmens hin offenen Nut, wobei die von der Vorderseite des Rahmens sichtbare Stirnfläche wesentlich schmaler ist als die übrige Breite der Profilstücke hinter der das Bild aufnehmenden Nut.

Die Befestigung eines Bildes in einer zur Innenseite des Rahmens hin offenen Nut hat den Nachteil, daß das Bild o. ä. die Nut ausfüllen muß, damit kein unerwünschtes Klappern von das Bild schützenden Glasscheiben auftritt.

Es sind Rahmenprofile bekannt, bei denen die Stirnfläche die die Hohlkammer begrenzende Innenwand des Profilstücks zum Innern des Rahmens hin überragt und so eine vordere Anschlagkante für das Bild o. ä. bildet. In einen derartigen Rahmen können Bilder, Spiegel o. dgl. beliebiger Dicke eingelegt werden, wenn sie an sich in bekannter Weise mit elastischen Haltern gegen den durch die überstehenden Stirnflächen gebildeten Anlagerand gedrückt werden.

Der Erfindung liegt die Aufgabe zugrunde, einen geschlossenen Dekorrahmen der eingangs erwähnten Art zu erstellen, bei dem die Form der Eckteile variiert werden kann, ohne daß eine Veränderung der eingelegten Bilder, Spiegel o. dgl. erfolgen müßte.

Diese Aufgabe wird erfindungsgemäß mit einem geschlossenen Dekorrahmen der eingangs erwähnten Art dadurch gelöst, daß die Stirnfläche der Profilstücke die jeweilige Innenwand zum Innern des Rahmens hin überragt und dabei einen Anlagerand für flächige Inhalte des Dekorrahmens bildet und daß die Eckteile ohne eine die Innenwand der Profilstücke fortsetzende Innenwand ausgebildet sind und einen in der Verlängerung der Innenwände der beiden Profilstücke bis zum Schnittpunkt dieser Verlängerungen freien Aufnahmeraum bilden.

Besondere Ausführungsarten der Erfindung sind in den abhängigen Ansprüchen 2-11 dargestellt.

Die erfindungsgemäßen Eckteile bilden, unabhängig von der Form ihrer Außenkante, einen Aufnahmeraum für rechteckige Bilder, Spiegel o. dgl., so daß auch bei abgerundeten oder prismatisch ausgebildeten Eckteilen Bilder, Spiegel o. dgl. mit rechteckigen Kanten in den Rahmen eingelegt werden können.

In einer besonders einfachen Ausführungsform ist die Verbindung der Profilstücke mit den Ansätzen der Eckteile durch Verformungen der Hohlkammern auf der Innenwand in die eingeschobenen Ansätze hinein erfolgt. Nach dem Einschieben der Eckteile in die Hohlkammern wird daher lediglich eine punktuelle Verformung der nicht sichtbaren Innenwand der Hohlkammern vorgenommen, die sich damit in den Ansatz des Eckteils eindrückt und eine feste Verbindung herstellt. Hierzu sind die Eckteile vorzugsweise aus Kunststoff gebildet. Alternativ hierzu können in die Ansätze der Eckteile Schrauben eingeschraubt werden, die zur festen Verbindung der Eckteile mit den Profilstücken dienen.

Der erfindungsgemäße Dekorrahmen läßt sich sehr vorteilhaft aus Aluminium-Profilteilen herstellen. Die Eckteile sind vorzugsweise aus Kunststoff gebildet und weisen die gleiche Oberflächenschicht auf den außen sichtbaren Flächen des Rahmens auf wie die Profilstücke. Auf diese Weise entsteht der Eindruck eines einheitlichen Rahmens.

Vorzugsweise ist die Breite der Stirnflächen der Eckteile etwas größer als die Breite der Stirnflächen der Profilstücke. Die Eckteile können dann einen kleinen Ansatz aufweisen, der die Stoßfuge zwischen dem Profilstück und dem Eckteil zumindest im Bereich der Stirnfläche und der sichtbaren Außenwand überdeckt.

Die Erfindung soll im folgenden anhand eines in der Zeichnung dargestellten Ausführungsbeispiels näher erläutert werden. Es zeigen :

Figur 1  eine Ansicht auf einen geschlossenen Dekorrahmen

Figur 2  einen Schnitt durch ein Profilstück des Rahmens

Figur 3  einen Schnitt durch ein alternativ ausgebildetes Profilstück des Rahmens

Figur 4  eine Ansicht von hinten auf ein Eckteil

Figur 5  eine Ansicht von hinten auf ein Eckteil mit den zugehörigen Profilstücken

Figur 6  eine perspektivische Ansicht auf die Stirnfläche und Außenwand einer durch zwei Profilstücke und einem Eckteil gebildeten Eckverbindung

Figur 7  ein Beispiel für die Befestigung der Ansätze von Eckteilen mittels einer Befestigungsschraube

Figur 8  drei Variationsformen für Eckteile

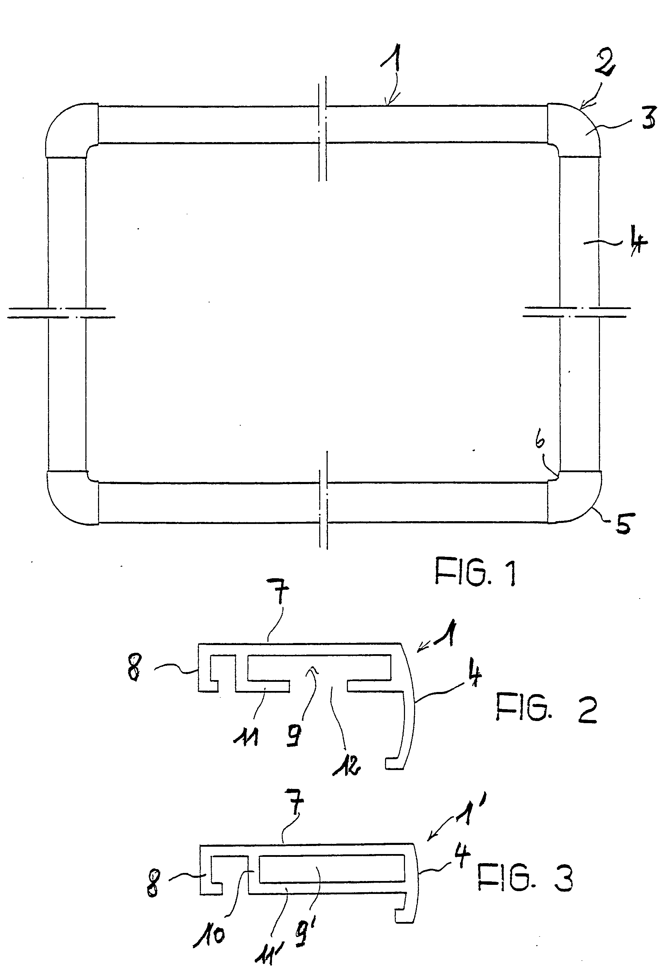

Der in Figur 1 dargestellte Rahmen besteht aus vier Profilstücken 1, die mit vier Eckteilen 2 zu einem geschlossenen, rechteckigen Rahmen verbunden sind. Die Eckteile 2 weisen eine Stirnfläche 3 auf, die Stirnflächen 4 der Profilstücke 1 im wesentlichen fortsetzen.

Die Stirnflächen der Eckteile 2 weisen eine gerundete Außenkante 5 und eine gerundete Innenkante 6 auf.

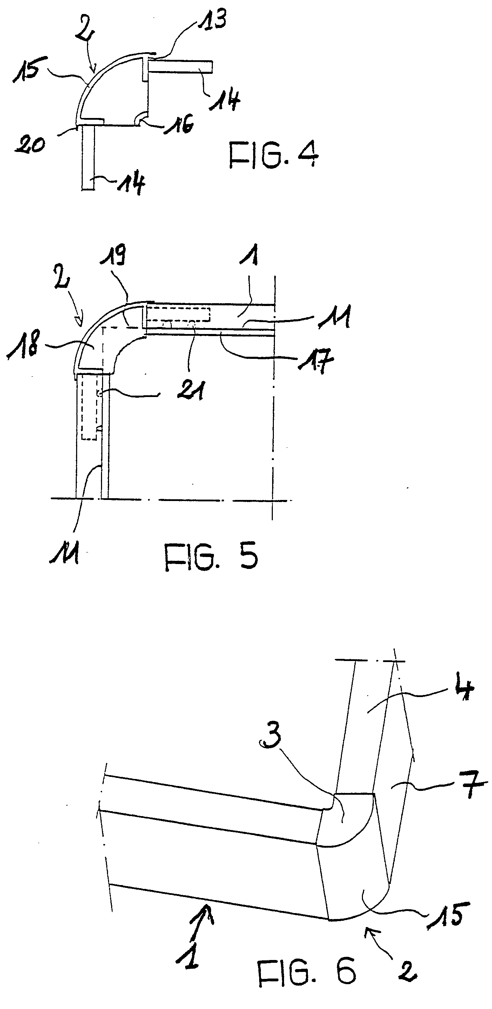

Die Figuren 2 und 3 zeigen jeweils einen Querschnitt durch den Aufbau der Profilstücke in zwei Ausführungsformen 1, 1'. Beide Profilstücke 1, 1' weisen eine etwas gewölbte Stirnfläche 4 auf, an die sich auf einer Seite eine Außenwand 7 anschließt. Die Außenwand 7 wird an ihrem freien Ende durch ein nach innen gerichtetes Rückwandstück 8 abgeschlossen. Das Rückwandstück 8 der Profile 1, 1' erstreckt sich etwa über die halbe Breite der Stirnfläche 4. Über diese Tiefe erstreckt sich auch eine direkt an die Stirnfläche 4 grenzende Hohlkammer 9, 9', die parallel zur Stirnfläche 4 durch ein parallel zum Rückwandstück verlaufendes Wandstück 10 sowie durch ein parallel zur Außenwand 7 verlaufendes Wandstück 11, 11' begrenzt ist. Während das Wandstück 11 durch eine Längsöffnung 12 unterbrochen ist, wodurch die Hohlkammer 9 mit der Öffnung 12 versehen ist, ist das Wandstück 11' ohne Unterbrechung ausgeführt, so daß die Hohlkammer 9' geschlossen ist.

Die Profilstücke 1 sind rechtwinklig abgeschnitten und stoßen mit ihrer Schnittfläche an eine Anschlagfläche 13 des Eckteils 2. Eine entsprechende Anschlagfläche 13 ist im Winkel von 90° vorgesehen. Aus beiden Anschlagflächen 13 des Eckteils 2 erstrecken sich Ansätze 14, die somit im rechten Winkel zueinander stehen, nach außen. Die Ansätze 14 sind rechteckig ausgebildet und in ihrer Form der Form der Hohlkammer 9 angepaßt.

Die Anschlagfläche 13 befindet sich auf einem entsprechend positionierten Wandsteg, der in Figur 4 erkennbar ist. Die Ansicht von der Rückwandseite des Rahmens läßt ferner eine gekrümmte Außenwand 15 sowie eine gekrümmte Innenkante 16 des Eckteils 2 erkennen. Während sich die Außenwand 15 über die Tiefe des Eckteils 2 erstreckt, wird die Innenkante 16 nur durch eine schmale Rippe gebildet, die sich nicht in eine Innenwand fortsetzt.

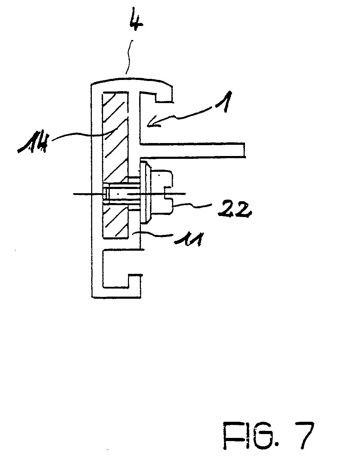

Figur 5 läßt dies erkennen. Darin ist das Eckteil 2 mit zwei aufgeschobenen Profilstücken 1 dargestellt. Die Innenwände 11 der Profilteile 1 werden nach innen von den Stirnflächen 4 überragt, die mit dem überstehenden Teil einen Anlagerahmen 17 bilden. Dieser hält im allgemeinen eine von hinten eingelegte Glasplatte, einen Spiegel, ein Plakat o. dgl. Das Fehlen einer Innenwand am Eckteil 2 bietet den Vorteil, daß das Eckteil 2 einen freien Aufnahmeraum 18 in der (gestrichelt dargestellten) Verlängerung 19 der Innenwände 11 der Profilstücke 1 bis zum Schnittpunkt der Verlängerungen 19 bildet. Der freie Aufnahmeraum der abgerundeten Eckteile 2 kann daher Glasplatten, Spiegelplatten, Bilder usw. aufnehmen, die rechtwinklige Ecken aufweisen, deren Ecken also nicht abgerundet werden müssen.

Figuren 4 und 5 lassen in Verlängerung der Außenwand 15 kleine Abdeckstücke 20 erkennen, die die Stoßfuge der Profilstücke 1 an der Anschlagfläche 13 abdecken. Entsprechende Abdeckstücke sind auch für die Stirnfläche 4 der Profilstücke 1 vorgesehen.

Die perspektivische Darstellung in Figur 6 läßt die Außenwand 7 und Stirnfläche 4 der Profilstücke 1 sowie die Außenwand 15 und Stirnfläche 3 der Eckteile 2 erkennen.

Die Verbindung der Profilstücke 1 mit den Ansätzen 14 der Eckteile 2 kann in einfacher Weise durch punktuelle Verformungen 21 in Form von Eindrückungen der Innenwände 11 in die Ansätze 14 hinein erfolgen. Dadurch erübrigen sich aufwendigere Verbindungsmaßnahmen.

Figur 7 zeigt die Befestigung von Ansätzen 14 von Eckstücken 2 an an einem Profilstück 1. Die Befestigung geschieht mittels einer Befestigungsschraube 22, die in eine Gewindebohrung in dem Ansatz 14 eingeschraubt wird. Die Schraube ragt durch die in Figur 2 beschriebene Öffnung 12 der Innenwand 11 und drückt mit ihrem Schraubenkopf gegen die Innenwand 11, wodurch der Ansatz 14 gegen die Innenwand 11 von der anderen Seite gezogen und durch Reibschluß gehalten wird.

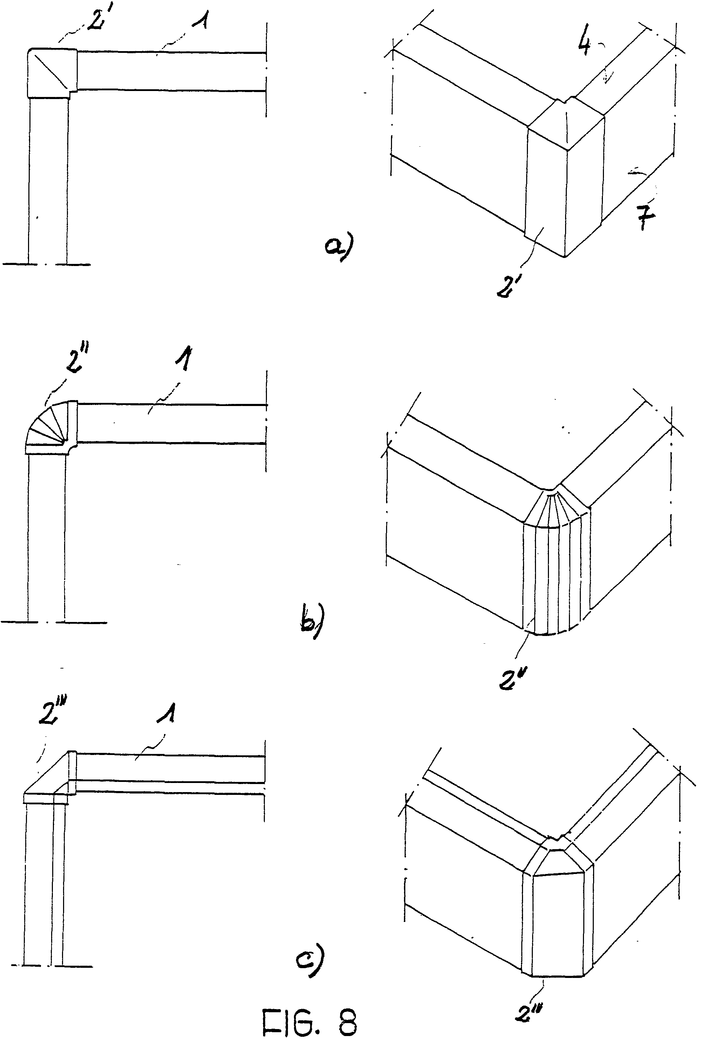

Figur 8 zeigt drei weitere Ausführungsformen für Eckteile 2', 2" und 2"', jeweils in einer Draufsicht und in einer perspektivischen Darstellung. Figur 8a zeigt ein Eckteil 2', das in herkömmlicher Weise eckig ausgebildet ist.

Das in Figur 8b dargestellte Eckteil 2" ist über den Winkel von 90° als Vieleck ausgebildet, so daß ein facettenartig unterteiltes Eckteil 2" entsteht.

Das in Figur 8c dargestellte Eckteil 2"' führt zu einer prismenartigen Ausbildung der Ecke, da die im Winkel von 90° zueinander stehenden Anschlagflächen durch eine gerade Außenkante miteinander verbunden sind.

In allen drei Ausführungsformen der Eckteile 2', 2" und 2"' in Figur 8 sind die Stoßkanten zwischen den Eckteilen 2', 2" und 2"' einerseits und den Profilstücken 1 andererseits durch an den Eckteilen angebrachte Abdeckstücke 20 (vgl. Figur 4) auf der Stirnfläche 4 sowie den Außenkanten 7 abgedeckt.

Es ist selbstverständlich, daß für den erfindungsgemäßen Dekorrahmen auch Kunststoffprofilteile verwendet werden können. Die Eckteile müssen nicht aus Kunststoff gebildet sein, sondern können beispielsweise auch aus Metallguß bestehen. Während es möglich ist, den Rahmen mit den Profilteilen und den Eckteilen mit einem einheitlichen Aussehen zu gestalten, kann es gewünscht sein, Eckteile und Profilteile gerade in verschiedenen Farben auszubilden, um von einer besonderen Gestaltungsmöglichkeit des erfindungsgemäßen Dekorrahmens Gebrauch zu machen.

## Patentansprüche

1. Geschlossener Dekorrahmen aus miteinander verbundenen Profilstücken (1), die mit einer Hohlkammer (9, 9') versehen sind und von außen sichtbar eine Stirnfläche (4) und eine umlaufende Außenwand (7) sowie eine Rückseite (8) und eine von außen nicht sichtbare zur Außenwand (7) parallele Innenwand (11, 11') bilden, wobei die Profilstücke (1) jeweils mittels eines Eckteils (2) verbunden sind, das im Eckbereich die Außenwände (7) und die Stirnflächen (4) der Profilstücke (1) im wesentlichen fortsetzt und mit jeweils einem Ansatz (14) in die jeweilige Hohlkammer (9, 9') der beiden benachbarten Profilstücke (1) ragt und dort mit ihnen verbunden ist, dadurch gekennzeichnet, daß die Stirnfläche der Profilstücke (1) die jeweilige Innenwand (11, 11') zum Innern des Rahmens hin überragt und dabei einen Anlagerand (17) für flächige Inhalte des Dekorrahmens bildet und daß die Eckteile (2) ohne eine die Innenwand (11, 11') der Profilstücke (1) fortsetzenden Innenwand ausgebildet sind und einen in der Verlängerung (19) der Innenwände (11, 11') der beiden Profilstücke (1) bis zum Schnittpunkt dieser Verlängerungen (19) freien Aufnahmeraum (18) bilden.

2. Dekorrahmen nach Anspruch 1, dadurch gekennzeichnet, daß die Profilstücke (1) senkrecht zu ihrer Längsrichtung abgeschnitten sind und daß die Eckstücke (2) Anschlagflächen (13) für die Profilstücke (1) aufweisen, aus denen die Ansätze (14) herausragen.

3. Dekorrahmen nach Anspruch 1 oder 2, dadurch gekennzeichnet, daß die Außenkanten der Stirnflächen (3) der Eckteile (2) abgerundet sind.

4. Dekorrahmen nach Anspruch 3, dadurch gekennzeichnet, daß auch die Innenkanten (6) der Stirnflächen (3) der Eckteile (2) abgerundet sind.

5. Dekorrahmen nach Anspruch 1 oder 2, dadurch gekennzeichnet, daß das Eckteil (2, 2') über den Winkel von 90° als Vieleck ausgebildet ist.

6. Dekorrahmen nach Anspruch 1 oder 2, dadurch gekennzeichnet, daß das Eckteil (2, 2') eine gerade Außenkante aufweist, die die im Winkel von 90° zueinander stehenden Anschlagflächen miteinander verbindet.

7. Dekorrahmen nach einem der Ansprüche 1-6, dadurch gekennzeichnet, daß die Verbindung der Profilstücke (1) mit den Ansätzen (14) der Eckteile (2) durch Verformungen (20) auf der Innenwand (11, 11') in die eingeschobenen Ansätze (14) hinein erfolgt ist.

8. Dekorrahmen nach einem der Ansprüche 1-7, dadurch gekennzeichnet, daß die Eckteile aus Kunststoff gebildet sind.

9. Dekorrahmen nach einem der Ansprüche 1-8, dadurch gekennzeichnet, daß die Profilstücke (1) und die Eckteile (2) mit einer gleichen Oberflächenschicht auf den außen sichtbaren Flächen (4, 7, 3, 15) des Rahmens versehen sind.

10. Dekorrahmen nach einem der Ansprüche 1-9, dadurch gekennzeichnet, daß die Eckteile (2) Abdeckstücke (20) aufweisen, die die Stoßfuge zwischen dem jeweiligen Eckteil (2) und den angrenzenden Profilstücken (1) überdecken.

11. Dekorrahmen nach einer der Ansprüche 1-10, dadurch gekennzeichnet, daß die Verbindung der Profilstücke (1) mit den Ansätzen (4) der Eckstücke mittels einer in die eingeschobenen Ansätze (14) eingeschraubten Schraube (22) erfolgt ist.

## Claims

1. Closed decorative frame with profiled sections (1) connected together, which are provided with a hollow chamber (9, 9') and form, outwardly visible, a front face (4) and a peripheral outer wall (7) as well as a rear side (8) and an inner wall (11, 11'), not outwardly visible, parallel to the outer wall (7), wherein the profiled sections (1) are each connected by means of a corner piece (2), which in substance continues the outer walls (7) and the front faces (4) of the profiled sections (1) in the corner region and which, by means of a lug (14) each, projects into the respective hollow chambers (9, 9') of the two adjoining profiled sections (1) and is there connected therewith, characterized in that the front face of the profiled sections (1) projects in the direction to the innerside of the frame beyond the respective inner wall (11, 11') and thereby forms an abutment margin (17) for flat contents of the decorative frame, and in that the corner pieces (2) are formed without an inner wall continuing the inner wall (11, 11') of the profiled section (1) and form a free receiving space (18) in the prolongation (19) of the inner walls (11, 11') of the two profiled sections (1) up to the intersection of these prolongations (19).

2. Decorative frame according to claim 1, characterized in that the profiled sections (1) are cut perpendicular to their longitudinal direction and in that the corner pieces (2) have abutment faces (13) for the profiled sections (1), from which the lugs (14) project.

3. Decorative frame according to claim 1 or 2, characterized in that the outer edges of the front faces (3) of the corner pieces (2) are rounded.

4. Decorative frame according to claim 3, characterized in that the inner edges (6) of the front faces (3) of the corner pieces (2) are also rounded.

5. Decorative frame according to claim 1 or 2, characterized in that the corner piece (2, 2') is formed as a polygon over 90°.

6. Decorative frame according to claim 1 or 2, characterized in that the corner piece (2, 2') has a straight outer edge, which connects together the abutment faces disposed at an angle of 90° to one another.

7. Decorative frame according to one of claims 1-6 characterized in that the connection of the profiled sections (1) with the lugs (14) of the corner pieces (2) is effected by deformations (21) of the inner wall (11, 11') into the inserted lugs (14).

8. Decorative frame according to one of claims 1-7, characterized in that the corner pieces are formed from plastics material.

9. Decorative frame according to one of claims 1-8, characterized in that the profiled sections (1) and the corner pieces (2) are provided with a like surface layer on the outwardly visible surfaces (4, 7, 3, 15) of the frame.

10. Decorative frame according to one of claims 1-9, characterized in that the corner pieces (2) have cover pieces (20), which cover over the joints between the respective corner piece (2) and the adjoining profiled sections (1).

11. Decorative frame according to one of claims 1-10, characterized in that the connection of the profiled sections (1) with the lugs (14) of the corner pieces is effected by means of a screw (22) screwed into the inserted lug (14).

**Revendications**

1. Cadre décoratif fermé, constitué d'éléments profilés (1) qui sont reliés les uns aux autres, présentent une chambre creuse (9, 9') et forment, vu de l'extérieur, une face frontale (4) et une paroi extérieure périphérique (7) ainsi qu'un côté arrière (8) et une paroi intérieure (11, 11') parallèle à la paroi extérieure (7) et non visible de l'extérieur, les éléments profilés (1) étant respectivement reliés au moyen d'une pièce d'angle (2) qui, dans la zone d'angle, prolonge essentiellement les parois extérieures (7) et les faces frontales (4) des éléments profilés (1), pénètre, par un embout respectif (14), dans la chambre creuse correspondante (9, 9') des deux éléments profilés voisins (1) et y est reliée à ceux-ci, caractérisé en ce que la face frontale des éléments profilés (1) dépasse de la paroi intérieure respective (11, 11'), en direction de l'intérieur du cadre, et forme ainsi un bord d'appui (17) pour des éléments plats contenus dans le cadre décoratif, et en ce que les pièces d'angle (2) sont réalisées sans paroi intérieure prolongeant la paroi intérieure (11, 11') des éléments profilés (1) et forment un espace de réception libre (18) dans le prolongement (19) des parois intérieures (11, 11') des deux éléments profilés (1), jusqu'au point d'intersection de ces prolongements (19).

2. Cadre décoratif selon la revendication 1, caractérisé en ce que les éléments profilés (1) sont coupés à longueur perpendiculairement à leur direction longitudinale et en ce que les pièces d'angle (2) présentent, pour les éléments profilés (1), des surfaces de butée (13) d'où font saillie les embouts (14).

3. Cadre décoratif selon la revendication 1 ou 2, caractérisé en ce que les bords extérieurs des faces frontales (3) des pièces d'angle (2) sont arrondis.

4. Cadre décoratif selon la revendication 3, caractérisé en ce que les bords intérieurs (6) des faces frontales (3) des pièces d'angle (2) sont également arrondis.

5. Cadre décoratif selon la revendication 1 ou 2, caractérisé en ce que la pièce d'angle (2, 2') a, sur l'angle de 90°, la forme d'un polygone.

6. Cadre décoratif selon la revendication 1 ou 2, caractérisé en ce que la pièce d'angle (2, 2') présente un bord extérieur rectiligne qui relie l'une à l'autre les surfaces de butée qui font un angle de 90° l'une avec l'autre.

7. Cadre décoratif selon l'une des revendications 1-6, caractérisé en ce que la liaison entre les éléments profilés (1) et les embouts (14) des pièces d'angle (2) introduits dans ces éléments, se fait par des déformations (21) de la paroi intérieure (11, 11') qui pénètrent dans les embouts (14).

8. Cadre décoratif selon l'une des revendications 1-7, caractérisé en ce que les pièces d'angle sont en plastique.

9. Cadre décoratif selon l'une des revendications 1-8, caractérisé en ce que les éléments profilés (1) et les pièces d'angle (2) comportent une couche de surface identique sur les faces (4, 7, 3, 15) du cadre visibles de l'extérieur.

10. Cadre décoratif selon l'une des revendications 1-9, caractérisé en ce que les pièces d'angle (2) présentent des éléments de recouvrement (20) qui recouvrent les joints entre la pièce d'angle respective (2) et les éléments profilés (1) contigus.

11. Cadre décoratif selon l'une des revendications 1-10, caractérisé en ce que la liaison entre les éléments profilés (1) et les embouts (14) des pièces d'angle introduits dans ces éléments se fait au moyen d'une vis (22) vissée dans les embouts (14).

FIG. 1

FIG. 2

FIG. 3

FIG. 4

FIG. 5

FIG. 6

FIG. 7

a)

b)

c)

FIG. 8

4